# EUROPEAN PATENT SPECIFICATION

(11) **EP 1 521 320 B1**
(45) Date of publication and mention of the grant of the patent: **01.06.2016**
(21) Application number: 04023238.1
(22) Date of filing: 29.09.2004
(51) Int. Cl.: H01M 8/02

(54) **Separator for fuel cell**
Separator für Brennstoffzelle
Séparateur pour pile à combustible

(30) Priority: 30.09.2003 JP 2003339470; 30.09.2003 JP 2003339471; 30.09.2003 JP 2003339472
(43) Date of publication of application: 06.04.2005
(73) Proprietor: NICHIAS CORPORATION, Chuo-ku Tokyo 104-8555 (JP); TOYOTA JIDOSHA KABUSHIKI KAISHA, Toyota-shi, Aichi-ken, 471-8571 (JP)
(72) Inventor: Ohinata, Tetsuo, Hamamatsu-shi, Shizuoka (JP); Omura, Atsushi, Hamamatsu-shi, Shizuoka (JP); Ishikawa, Hideto, Hamamatsu-shi, Shizuoka (JP); Inagaki, Tsuyoshi, Hamamatsu-shi, Shizuoka (JP); Nagai, Kouji, Hamamatsu-shi, Shizuoka (JP); Kato, Chisato, Aichi-ken, 477-8571 (JP); Suzuki, Toshiyuki, Aichi-ken, 477-8571 (JP); Takeshita, Naochiro, Aichi-ken, 477-8571 (JP); Asai, Yasuyuki, Aichi-ken, 477-8571 (JP)
(74) Representative: Grünecker Patent- und Rechtsanwälte PartG mbB

(56) References cited:
- WO-A1-99/49530
- JP-A- 10 040 938
- JP-A- 2000 082 476
- JP-A- 2001 335 695
- JP-A- 2002 155 149

## Description

### FIELD OF THE INVENTION

The present invention relates to a separator for fuel cell.

### BACKGROUND OF THE INVENTION

The demand for fuel cells, which directly convert the chemical energy possessed by a fuel into electrical energy, is growing in recent years. In general, a fuel cell has a structure comprising a stack of many unit cells each comprising electrode plates, an electrolyte film sandwiched therebetween, and a separator disposed on an outer side of these.

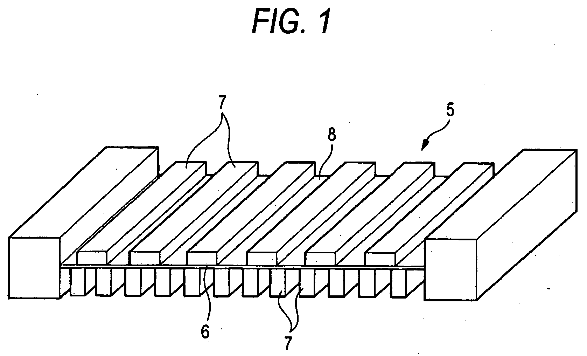

Fig. 1 is a diagrammatic view illustrating the appearance of a general separator for fuel cell. This separator comprises a flat plate member 6 and partition walls 7 disposed on each side of the flat plate member 6 at a given interval. In fabricating a fuel cell, many such fuel-cell separators 5 are stacked in the direction of projection of the partition walls (upward/downward direction in the figure). This stacking forms a constitution in which a reactant gas (hydrogen or oxygen) is passed through channels 8 each formed by a pair of adjacent partition walls 7. Because of this, the fuel-cell separator 5 is required to have excellent gas impermeability so as to prevent the two reactant gases from mixing with each other. In addition, the fuel-cell separator 5 is further required to have high electrical conductivity and excellent strength because unit cells are stacked.

In the field where a high voltage is required as in, e.g., motor vehicles, several hundred unit cells are stacked to fabricate a cell. Since this stack is generally used under the conditions of about 80°C, the separators are required to have dimensional stability to heat (low thermal expansivity). In case where the separators have high thermal expansivity, the stack as a whole expands thermally and the clamping load hence increase. As a result, the fuel-cell separators themselves and the electrolyte films break. There are also cases where due to the insufficient strength, insufficient plate-thickness dimensional accuracy, and warpage of the separators, etc., stack assembly encounters difficulties in assembly operation, breakage, and other troubles. In particular, the warpage of fuel-cell separators not only makes stack assembly difficult but also results in insufficient contact between unit cells after assembly. As a result, contact electrical resistance becomes uneven, leading to a decrease in power generation performance. There are also cases where an offset load breaks the fuel-cell separators.

Separators for fuel cells are generally obtained by a method in which a conductive resin composition comprising a thermosetting resin and, dispersed therein, ingredients such as a conductive filler, e.g., graphite, and a carbon fiber or the like for reinforcement is press-molded as a molding material into a give shape, since this method is advantageous in productivity. Because of this, in case where a molding material containing an ingredient insufficiently dispersed therein is used, this ingredient in the fuel-cell separator obtained is unevenly distributed and this causes local differences in thermal expansion coefficient, resulting in warpage or undulation and also in a local deficiency in strength.

Thus, due to a difference in shape between the front and back sides (current collection side and water channel side) of the fuel-cell separator, there is a difference in the orientation of the conductive filler between the thickness direction (upward/downward direction in Fig. 1) and the direction perpendicular to the thickness direction (left/right direction in Fig. 1). As a result, differences in thermal expansion arise and local differences in elongation hence occur, resulting in warpage or undulation. Hereinafter, the direction perpendicular to the thickness direction is referred to as the horizontal direction.

Especially in the case of a separator in which the front and back sides of the flat plate member 6 differ from each other in the number of partition walls 7 disposed thereon, there is a difference in the content of a component between the front and back sides and considerable warpage also occurs. However, since the molding material is generally prepared by dry-mixing a thermosetting resin with compounding ingredients, the mixing operation unavoidably requires much time so as to heighten the dispersion of the compounding ingredients.

Known techniques for diminishing warpage include a fuel-cell separator in which surfaces which come into contact with an electrode part have a lower resin content than surfaces which do not come into contact with an electrode part (see reference 1), and a fuel-cell separator in which at least part of the periphery or outer surfaces has been reinforced with a reinforcement comprising a metallic material, fiber-reinforced resin material, or the like (see reference 2).

Also employed is a technique in which a specific resin and a specific conductive filler are used for diminishing the coefficient of thermal expansion. For example, a fuel-cell separator is known which is obtained from a composition comprising graphite particles having a specific aspect ratio and a specific mean particle size, a phenolic novolak resin, and a carbon fiber and which has a difference in density between the partition walls and the grooves (see reference 3).

On the other hand, there is a technique for enhancing the dispersibility of compounding ingredients which comprises wet-mixing a thermosetting resin with compounding ingredients, in place of the dry-mixing described above. For example, a method is known which comprises adding compounding ingredients to a liquid thermosetting resin (initial polymer for a thermosetting resin) or to a solution of a thermosetting resin in a solvent and mixing all these ingredients together (see, for example, reference 4).
- [Reference 1]: JP 2003-151574 A
- [Reference 2]: JP 2002-358973 A
- [Reference 3]: JP 2002-25572 A
- [Reference 4]: JP 2002-343374 A

However, in references 1 and 2, no investigation is made on a difference in thermal expansion coefficient, which is causative of warpage, and the problem of warpage hence remains basically unsolved. The fuel-cell separator according to the reference 3 as a whole has a reduced coefficient of thermal expansion. However, in this document also, no investigation is made on a difference in thermal expansion coefficient among parts of the separator.

Further, to produce the molding material described in reference 4 has the following drawbacks. Since the liquid thermosetting resin has a high viscosity, the mixing thereof with compounding ingredients requires a considerably high torque and necessitates a large high-power mixing machine. In the case where a solution of a thermosetting resin in a solvent is used, it is necessary to separately conduct the step of removing the solvent and the step of treating the solvent removed, from the standpoint of environmental preservation. These steps lead to a cost increase.

JP2001335695A describes a thermosettable resin molding material, which comprises 10 to 25 wt% of a thermosetting resin, 70 to 85 wt% of graphite and 0.1 to 3 wt% of spherical silica.

JP2002155149A describes a carbonaceous powder molding material comprising carbonaceous powder and phenolic resin powder in a weight ratio of 95/5 to 80/20 and silica in an amount of 0.1 to 5 wt%.

An object of the present invention, which has been achieved under these circumstances, is to provide a high-performance separator for fuel cell which is far reduced in warpage as compared with the fuel-cell separators proposed so far, has excellent suitability for assembly, does not break, attains excellent tight contact between unit cells, and is free from unevenness in contact electrical resistance.

This object has been solved by the separator for fuel cell according to claim 1. Preferred embodiments are defined in subclaims 2 to 5 as well as in the description.

### SUMMARY OF THE INVENTION

The present inventors have made eager investigation to examine the problem. As a result, it has been found that the foregoing objects can be achieved by the following separator for fuel cell, forming material for fuel-cell separator and process for producing the fuel-cell separator. With this finding, the present invention is accomplished.

The present invention is mainly directed to the following items:
(1) A separator for fuel cell formed from a conductive resin composition,
   wherein the difference between the thermal expansion coefficient of the separator for fuel cell in the thickness direction and that in a direction perpendicular to the thickness direction is 20x10-6 K-1 or smaller,
   wherein the conductive resin composition comprises:
   20-60% by weight of a dimensionally anisotropic conductive filler;
   20-40% by weight of a thermosetting resin;
   15-30% by weight of a spherical filler; and
   5-10% by weight of a carbon fiber;
   based on the total weight of the conductive resin composition obtainable by a process comprising the steps of:
   preparing a mixed powder by dry-mixing a dimensionally anisotropic conductive filler, a thermosetting resin, a spherical filler, and a carbon fiber at room temperature;
   preparing a molten mixture by melt-mixing the mixed powder at a temperature where the thermosetting resin does not cure completely;
   preparing a powder comprising particles having a mean particle size of 500 mu m or smaller by solidifying the molten mixture by naturally cooling the molten mixture to obtain a solid matter, pulverizing the solid matter to obtain fine particles of the solid matter, and then classifying the fine particles;
   molding the powder filled in a mold into a sheet to obtain a preform at a temperature where the thermosetting resin does not cure completely; and
   molding the preform set in a mold for a separator for fuel cell at a temperature where the thermosetting resin cures completely.
(2) The separator for fuel cell according to item 1, wherein the dimensionally anisotropic conductive filler is an expanded graphite.
(3) The separator for fuel cell according to item 1, wherein the spherical filler comprises at least one member selected from a group consisting of a spherical silica and a spherical graphite.
(4) The separator for fuel cell according to item 1, wherein the separator has a thinnest part, and the spherical filler has a mean particle size which is up to 25% of the thickness of the thinnest part.
(5) The separator for fuel cell according to item 1, which has a flexural strength of 40 MPa or higher and a flexural modulus of 12 GPa or lower.

### BRIEF DESCRIPTION OF THE DRAWINGS

Fig. 1 is a diagrammatic view showing an example of separators for fuel cells.
Fig. 2 is a flow diagram showing an embodiment of the process of the invention for producing a separator for fuel cell.
Fig. 3 is an optical photomicrograph of a section of a solid material obtained through melt-mixing.
Fig. 4 is an optical photomicrograph of a section of the sample produced in Example 1.
Fig. 5 is an optical photomicrograph of a section of the sample produced in Comparative Example 4.

### DETAILED DESCRIPTION OF THE INVENTION

The separator for fuel cell of the invention will be explained below in detail.

The separator for fuel cell of the invention is a molding of a given shape, such as that shown in Fig. 1, formed from a forming material for fuel-cell separator, which is produced from a conductive resin composition. Hereinafter, the forming material produced from the conductive resin composition simply referred to as "forming material". This separator is characterized in that the difference between the thermal expansion coefficient as measured in the thickness direction and the thermal expansion coefficient as measured in the horizontal direction is 20×10⁻⁶ K⁻¹ or smaller. The shape of the separator and the forming material are not particularly limited as long as this requirement concerning a difference in thermal expansion coefficient is satisfied.

However, the forming material of the invention preferably comprises powder, formed from the conductive resin composition, comprising a thermosetting resin and, a dimensionally anisotropic conductive filler, a spherical filler, and a carbon fiber each dispersed in the thermosetting resin. Namely, a dimensionally anisotropic conductive filler, a spherical filler, and a carbon fiber are preferably embedded in a thermosetting resin to form a particle of the powder, and such particles gather together to constitute the forming material. In the present invention, a dimensionally anisotropic conductive filler stands for a conductive filler having an aspect ratio of not less than 10.

Further, the conductive resin composition of the invention preferably comprises 20-60% by weight of a dimensionally anisotropic conductive filler, 20-40% by weight of a thermosetting resin, 15-30% by weight of a spherical filler, and 5-10% by weight of a carbon fiber based on the total weight of the conductive resin composition.

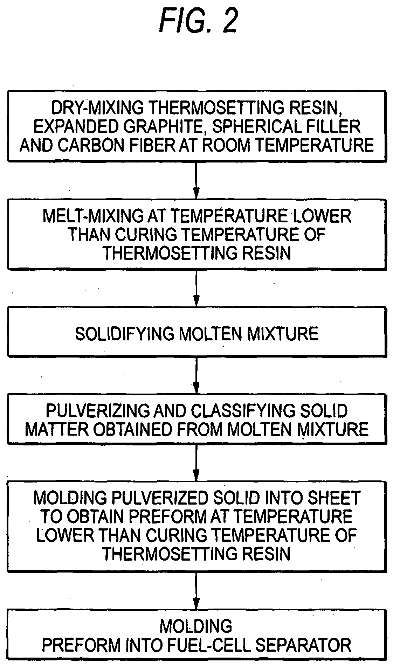

Fig. 2 is a flow diagram showing an embodiment of the process of the invention for producing a separator for fuel cell. In Fig. 2, a powder of a thermosetting resin, a dimensionally anisotropic conductive filler, a spherical filler, and a carbon fiber are preferably first dry-mixed together at room temperature by means of a Henschel mixer, shaker, or the like to obtain a mixed powder. This dry-mixing need not be conducted over a prolonged period until the thermosetting resin becomes sufficiently evenly mixed with the compounding ingredients as in the related art method for obtaining a conductive resin composition through dry-mixing only. Consequently, a considerable reduction in mixing time can be attained.

Subsequently, the powder mixture is melt-mixed at a temperature that the thermosetting resin does not cure completely, for example, about 100°C. For this melt-mixing can be used a mixing machine such as a pressure kneader, Brabender, or a single- or twin-screw mixer. Through the melt-mixing, the dimensionally anisotropic conductive filler, spherical filler, and carbon fiber are reduced or broken into finer particles and, simultaneously therewith, the thermosetting resin softens or fluidifies and infiltrates into interstices among the dimensionally anisotropic conductive filler, spherical filler, and carbon fiber. Consequently, even when the thermosetting resin, dimensionally anisotropic conductive filler, spherical filler, and carbon fiber were not sufficiently evenly mixed in the dry-mixing, the dispersibility of the dimensionally anisotropic conductive filler, spherical filler, and carbon fiber in the thermosetting resin is enhanced by this melt-mixing.

Thereafter, the molten mixture obtained is cooled and solidified. The cooling may be accomplished by allowing the molten mixture taken out of the mixing machine to stand at room temperature. The solid matter obtained comprises the thermosetting resin and the dimensionally anisotropic conductive filler, spherical filler, and carbon fiber each evenly dispersed therein.

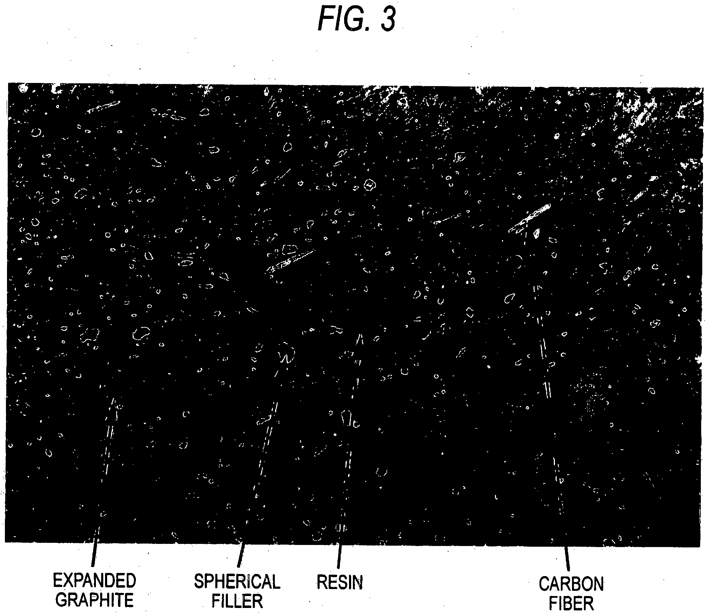

The solid matter obtained from the molten mixture is then pulverized to obtain the forming material of the invention. For the pulverization can be used a known pulverizer such as, e.g., a Henschel mixer, mixer, or ball mill. Although the sizes of the individual particles constituting the forming material are not particularly limited, the mean particle size of the forming material is preferably 500 µm or smaller from the standpoints of ease of packing into molds and moldability. As shown by the optical photomicrograph in Fig. 3, the individual particles comprise the thermosetting resin and the dimensionally anisotropic conductive filler, spherical filler, and carbon fiber each evenly dispersed therein as fine particles. Consequently, the fuel-cell separator obtained from the forming material of the invention contains the dimensionally anisotropic conductive filler, spherical filler, and carbon fiber evenly dispersed therein as finer particles. This separator is hence excellent in various properties. Specifically, the difference between the thermal expansion coefficient of the separator as measured in the thickness direction and the thermal expansion coefficient thereof as measured in a direction perpendicular to the thickness direction (left/right direction on the page of Fig. 1) is as small as 20×10⁻⁶ K⁻¹ or below, and the separator has excellent dimensional accuracy and shape stability with a warpage amount as small as 2 mm or less and has excellent mechanical properties with a flexural strength of 40 MPa or higher and a flexural modulus of 12 GPa or lower, as will be demonstrated in the Examples given later.

When used for producing a separator for fuel cell, the forming material of the invention may be packed as it is into a mold for fuel-cell separators and press-molded at a temperature where the thermosetting resin cures completely, for example, 150-200°C.

Alternatively, the powder obtained from the molten mixture is preferably packed into a mold and press-molded at a temperature where the thermosetting resin does not cure completely, for example, about 50-120°C, to obtain a sheet-form preform. By conducting the preforming step, the dimensionally anisotropic conductive filler, spherical filler, and carbon fiber are rearranged. As a result, the dimensionally anisotropic conductive filler, spherical filler, and carbon fiber in the preform obtained are distributed more evenly, and this further improves various properties of the fuel-cell separator to be obtained.

When the preforming step is conducted, a given number of sheets of the sheet-form preform are placed in a mold for fuel-cell separators, and press-molded at a mold temperature of, for example, 150-200°C (final molding) so that the thermosetting resin cures completely. Thus, a separator for fuel cell is obtained.

As described above, according to the process of the invention, a dimensionally anisotropic conductive filler, a spherical filler, and carbon fiber can be evenly dispersed in a thermosetting resin in preparing a conductive resin composition without the necessity of using a solvent as in the wet mixing heretofore in use. In addition, since the thermosetting resin to be used can be a powdery one, an existing dry-mixing machine can be used as it is. The process of the invention is hence advantageous in cost. In the fuel-cell separator obtained, the dimensionally anisotropic conductive filler, spherical filler, and carbon fiber are highly evenly dispersed therein. The separator is hence excellent in dimensional stability and mechanical properties.

In each of the steps described above, conditions other than treating temperature, such as, e.g., mixing time and pressing time, are suitably selected. The kinds and properties of preferred thermosetting resins, dimensionally anisotropic conductive fillers, spherical fillers, and carbon fiber for use in the process of the invention and the amounts of these ingredients to be incorporated are shown below as examples.

### <Thermosetting Resin>

Examples of the thermosetting resin include epoxy resins, phenolic resins, furan resins, unsaturated polyester resins, and polyimide resins. These resins may be used alone or as a mixture of two or more thereof. From the standpoints of properties to be obtained, productivity, etc., it is preferred to use a mixture of an epoxy resin and a polyimide resin.

The term epoxy resins as used here means a conception which includes all of structures formed by the reaction of a polyfunctional epoxy compound with a hardener and epoxy compound/hardener combinations which give such structures. Hereinafter, an epoxy compound which has not undergone such a reaction and a structure yielded by the reaction are often referred to as an epoxy resin precursor and an epoxy compound, respectively. The amount of an epoxy resin is equal to the weight of a cured epoxy resin obtained therefrom.

As an epoxy resin precursor can be used any of various known compounds. Examples thereof include bifunctional epoxy compounds such as the bisphenol A diglycidyl ether type, bisphenol F diglycidyl ether type, bisphenol S diglycidyl ether type, bisphenol AD diglycidyl ether type, and resorcinol diglycidyl ether type; polyfunctional epoxy compounds such as the phenolic novolak type and cresol novolak type; and linear aliphatic epoxy compounds such as epoxidized soybean oil, alicyclic epoxy compounds, heterocyclic epoxy compounds, glycidyl ester epoxy compounds, and glycidylamine epoxy compounds. However, epoxy resin precursors usable in the invention should not be construed as being limited to these examples. Also usable are compounds having substituents, e.g., halogens, and compounds having a hydrogenated aromatic ring. The epoxy equivalent, molecular weight, number of epoxy groups, and the like of each of those compounds also are not particularly limited. However, when an epoxy resin precursor consisting mainly of an epoxy compound having an epoxy equivalent of about 400 or higher, especially about 700 or higher, is used, then a prolonged pot life can be obtained. In addition, since such compounds are solid at ordinary temperature, they are easy to handle in powder molding. It is also possible to use two or more epoxy compounds in combination. For example, an epoxy resin precursor having an epoxy equivalent of about 200 and giving a cured resin having a dense network structure is mixed with a precursor having an epoxy equivalent of about 900 and a long pot life. This mixture can be handled as a powder or as a liquid having a slightly long pot life.

Those epoxy resin precursors react with a hardener to give cured epoxy resins. As the hardener also, various known compounds can be used. Examples thereof include aliphatic, alicyclic, and aromatic polyamines such as dimethylenetriamine, triethylenetetramine, tetraethylenepentamine, menthenediamine, and isophoronediamine and carbonates of these polyamines; acid anhydrides such as phthalic anhydride, methyltetrahydrophthalic anhydride, and trimellitic anhydride; polyphenols such as phenolic novolak; polymercaptans; anionic polymerization catalysts such as tris (dimethylaminomethyl) phenol, imidazole, and ethylmethylimidazole; cationic polymerization catalysts such as BF₃ and complexes thereof; and latent hardeners which generate these compounds upon pyrolysis or photodecomposition. However, the hardener should not be construed as being limited to these examples. It is also possible to use two or more hardeners in combination.

The term polyimides means a conception which includes all polymers having imide groups ((-CO-)₂N-) in the molecule. Examples thereof include thermoplastic polyimides such as poly(amide-imide)s and polyetherimides; non-thermoplastic polyimides such as (wholly) aromatic polyimides; and thermosetting polyimides such as bismaleimide-based polyimides, nadic acid-based polyimides, e.g., allylnadimide-based ones, and acetylene-based polyimides. However, the polyimides should not be construed as being limited to these examples. It is also possible to use two or more polyimides in combination. Especially preferred to these are thermosetting polyimides. Thermosetting polyimides have an advantage over thermoplastic polyimides and non-thermoplastic (aromatic) polyimides that they are easy to process. Thermosetting polyimides are highly satisfactory in high-temperature properties among various organic polymers, although inferior in the properties to non-thermoplastic polyimides. In addition, thermosetting polyimides develop almost no voids or cracks through curing. Thermosetting polyimides are hence suitable for use as a component of the conductive resin composition of the invention.

The proportion of an epoxy resin and that of a polyimide resin are preferably 5-95% by weight and 95-5% by weight based on the whole amount of thermosetting resin, respectively. In case where the proportion of each resin is lower than 5% by weight, the advantage brought about by using these resins in combination is only slight. The ratio of the amount of an epoxy resin to that of a polyimide resin is more preferably from 95:5 to 30:70, even more preferably from 85:15 to 60:40.

The amount of the thermosetting resin to be incorporated is preferably 20-40% by weight based on the whole amount of the conductive resin composition. In case where the amount thereof is smaller than 20% by weight, the material shows reduced flowability and is difficult to mold into a given shape. In addition, the function of the resin as a binder is lessened to pose problems, for example, that the resultant fuel-cell separator shows enhanced thickness memory and a desired thickness cannot be obtained. On the other hand, in case where the amount of the thermosetting resin incorporated exceeds 40% by weight, not only the resultant separator has insufficient strength and reduced electrical conductivity, but also the enhanced flowability of the composition poses problems, for example, that molding of the composition results in an increased amount of barrs and sticking to the mold. In view of these points, the amount of the thermosetting resin to be incorporated is more preferably 20-30% by weight.

### <Dimensionally anisotropic conductive filler>

Examples of the dimensionally anisotropic conductive filler include expanded graphite, artificial graphite, and carbon black. Such dimensionally anisotropic conductive fillers can be used alone or as a mixture of two or more thereof. Preferred of these is expanded graphite from the standpoint of moldability and profitability. Expanded graphite is a graphite which is obtained, e.g., by treating flake graphite with concentrated sulfuric acid, and heating the treated to enlarge the interplanar spacing in the crystal structure of graphite, and is highly bulky. The expanded graphite to be used has a bulk specific gravity of preferably about 0.3 or lower, more preferably about 0.1 or lower, further more preferably about 0.05 or lower. Use of expanded graphite having such a bulk specific gravity gives a separator satisfactory especially in strength, electrical conductivity, and lubricity.

The amount of the dimensionally anisotropic conductive filler to be incorporated is preferably 20-60% by weight based on the whole amount of the conductive resin composition. In case where the amount thereof is smaller than 20% by weight, satisfactory electrical conductivity cannot be obtained. In case where the amount thereof exceeds 60% by weight, problems concerning strength or molding operation arise. In view of these, the amount of the dimensionally anisotropic conductive filler to be incorporated is more preferably 25-60% by weight, further more preferably 30-60% by weight.

### <Spherical Filler>

In general, when a conductive resin composition containing expanded graphite is molded into a plate form, the expanded graphite is mostly oriented in horizontal directions in the molding, resulting in a difference in thermal expansion coefficient between the thickness direction and the horizontal directions. This difference is causative of warpage. A spherical filler is added in order to diminish such anisotropy.

Examples of the spherical filler include spherical silica, hollow silica, and spherical graphite (artificial graphite), which are low-thermal-expansion materials. These materials may be used alone or as a mixture of two or more thereof. Of these, spherical graphite is more desirable than the silicas from the standpoint of electrical conductivity because it can be used also as a filler having electrically conductive. Due to the presence of the spherical filler in the conductive resin composition, the expanded graphite are apt to be oriented also in the molding thickness direction around the particles of the spherical filler. As a result, the difference in thermal expansion coefficient between the thickness direction and a horizontal direction decreases. Furthermore, the larger the diameter of the spherical filler, the more the expanded graphite is apt to be oriented in the thickness direction.

However, use of a spherical filler having too large a particle size may yield a fuel-cell separator in which the spherical filler is partly exposed on the separator surface to cause a decrease in contact resistance. It is therefore preferable that the particle size of the spherical filler be up to 25% of the thickness of the thinnest part of the fuel-cell separator. For example, when the thinnest part of the fuel-cell separator has a thickness of 0.5 mm, the diameter of the spherical filler is preferably 125 µm or smaller, more preferably 50 µm or smaller.

The amount of the spherical filler to be incorporated is preferably 15-30% by weight based on the whole amount of the conductive resin composition. In case where the amount thereof is smaller than 15% by weight, the orientation of the expanded graphite cannot be regulated satisfactorily and, hence, a reduction in the difference in thermal expansion coefficient is not attained, resulting in a warped fuel-cell separator. In case where the amount thereof exceeds 30% by weight, particles of the spherical filler may protrude from the surface of the resultant fuel-cell separator and this may cause a decrease in contact resistance and reduce the strength and gas impermeability of the molding. In view of these, the amount of the spherical filler to be incorporated is more preferably 15-25% by weight.

### <Carbon fiber>

Examples of the carbon fiber include PAN-derived carbon fiber, pitch-derived carbon fiber, and rayon-derived carbon fiber. These fibrous materials may be used alone or as a mixture of two or more thereof. The addition of carbon fiber improves the strength, especially impact strength, of the fuel-cell separator while exerting almost no influence on electrical conductivity and thermal expansivity. The shape of the carbon fiber is not particularly limited. However, the carbon fiber to be used in preparing the conductive resin composition have a fiber length of preferably about 0.01-100 mm, more preferably 0.1-20 mm. In case where the fiber length thereof exceeds 100 mm, difficulties are encounted in molding and a smooth surface is difficult to obtain. In case where the fiber length thereof is shorter than 0.01 mm, a reinforcing effect cannot be expected due to the melt-mixing and the pulverization of the solid matter.

The amount of the carbon fiber to be incorporated is preferably 5-10% by weight based on the whole amount of the conductive resin composition. In case where the amount thereof is smaller than 5% by weight, satisfactory impact resistance is not obtained. In case where the amount thereof exceeds 10% by weight, problems concerning molding operation arise. In view of these, the amount of the carbon fiber to be incorporated is more preferably 7-9% by weight.

### EXAMPLES

The present invention is now illustrated in greater detail with reference to Examples and Comparative Examples,

### Sample Production

Expanded graphite (EXP60M, manufactured by Nippon Graphite Industries, Ltd.), an epoxy resin (bisphenol A type epoxy resin having an epoxy equivalent of 300 to 500 with dicyandiamide as a curing agent, available from Japan Epoxy Resins Co., Ltd. or NIPPON KAYAKU CO., LTD.), a polyimide resin (KIR30, manufactured by KYOCERA Chemical Corporation), carbon fiber having an average fiber diameter of 13 µm and an average fiber length of 370 µm (S242, manufactured by Donak Corp.), and spherical silica FB74, manufactured by Denki Kagaku Kogyo Kabushiki Kaisha) and spherical graphite (ATS, manufactured by Oriental Sangyo Co., Ltd.) each having an mean particle size of about 50 µm were introduced, according to each of formulations shown in Table 1, into a Henschel mixer and dry-mixed at room temperature. The powder mixture obtained was introduced into a pressure kneader. The powder mixture was melt-mixed at 100°C and the resultant molten mixture was allowed to cool naturally and solidify. Subsequently, the solid obtained from the molten mixture was pulverized to obtain a powder having an mean particle size of 100 µm. This powder, which had been obtained from the molten mixture, was packed into a mold and press-molded at 100°C to produce a sheet-form preform having a thickness of 3 mm. Subsequently, final molding was conducted for 10 minutes at a mold temperature of 200°C and a pressing pressure of 100 MPa to produce a sheet-form sample having a thickness of 2 mm (Examples 1 to 4 and Comparative Example 1).

On the other hand, the compounding ingredients shown above were introduced, according to each of formulations shown in Table 1, into a Henschel mixer and dry-mixed at room temperature. The powder mixture obtained was packed into a mold and press-molded at ordinary temperature to form a sheet. This sheet was subjected to 10-minute final molding at a mold temperature of 200°C and a pressing pressure of 100 MPa to produce a sheet-form sample having a thickness of 2 mm (Comparative Examples 2 to 4).

### Measurement of Sample Properties

The thermal expansion coefficient was determined in the following manner. A 5 mm-square test piece having a thickness of 10 mm was cut out of the sample obtained. Using "MA8310", manufactured by Rigaku Corp., the test piece was heated at a rate of 1 °C/min while imposing a load of 0.1 N on a 3 mm-ϕ probe, and the thermal expansion coefficient in the range of 28-100°C was measured in each of the direction of the thickness of the test piece and the horizontal direction.

The flexural strength and flexural modulus were determined by cutting a test piece having a width of 20 mm, length of 100 mm, and thickness of 2 mm out of the sample obtained and examining the test piece in a 100°C atmosphere with "Autograph AG-100kND", manufactured by Shimadzu Corp., in accordance with JIS K7171.

### Measurement of Warpage of Fuel-Cell Separator

A fuel-cell separator having the shape shown in Fi. 1 was produced according to the sample production procedure and molding conditions described above. The shape and dimensions of each part are as follows. The flat plate member had an overall length of 300 mm and an overall width of 250 mm. The flat plate member had 60 cooling-water channels (width, 2 mm; depth, 0.5 mm) on one side and 120 gas channels (width, 1 mm: depth, 0.5 mm) on the other side. The thickness of the flat plate member, which was the thinnest part, was regulated to 0.5 mm. The distance between the top surfaces of the partition walls on one side and the top surfaces of the partition walls on the other side (overall thickness) was regulated to 1.5 mm.

Using a three-dimensional laser analyzer (manufactured by Coms Co., Ltd.), 35 points in the surfaces of the fuel-cell separator placed on a surface plate were examined. The difference between the maximum found value and the minimum found value was determined as a warpage amount.

In Table 1 are shown the results of the measurements together with mixing methods and formulations.

**Table 1**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Mixing method | | dry+melt | dry+melt | dry+melt | dry+melt | dry+melt | dry only | dry only | dry only |
| | Expanded graphite | 40 | 40 | 40 | 40 | 70 | 70 | 55 | 50 |
| | Epoxy resin | 20 | 20 | 20 | 20 | 25 | 25 | 20 | 20 |
| Amount (wt%) | Polyimide resin | 5 | 5 | 5 | 5 | 5 | 5 | 5 | 5 |
| | Carbon fiber | 5 | 5 | 5 | 5 | 0 | 0 | 5 | 5 |
| | Spherical graphite | 0 | 15 | 20 | 30 | 0 | 0 | 0 | 0 |
| | Spherical silica | 30 | 15 | 10 | 0 | 0 | 0 | 15 | 20 |
| Thermal expansion coefficient (x10⁻⁶K⁻¹) | Thickness direction | 23 | 28 | 27 | 26 | 47 | 60 | 40 | 29 |
| | Horizontal direction | 12 | 12 | 11 | 11 | 8 | 7 | 6 | 5 |
| | Difference | 11 | 14 | 16 | 15 | 38 | 53 | 34 | 24 |
| Flexural strength at 100°C (MPa) | | 50 | 47 | 49 | 46 | 35 | 58 | 55 | 53 |
| Flexural modulus (GPa) | | 10 | 9.7 | 11.7 | 9.3 | 8.7 | 7.3 | 8.4 | 8.1 |
| Warpage amount (mm) | | 1 | 1.5 | 2 | 1 | 5 | 5 | 3 | 2.5 |

Table 1 shows that the fuel-cell separators which have been formed from a composition satisfying the requirements concerning compounding materials and proportions specified in the invention and in which the difference between the thermal expansion coefficient as measured in the thickness direction and the thermal expansion coefficient as measured in the horizontal direction is 20×10⁻⁶ K⁻¹ or smaller have a warpage amount as small as 2 mm or less and excellent mechanical properties with a flexural strength of 40 MPa or higher and a flexural modulus of 12 GPa or lower.

This is due to that a thermosetting resin, expanded graphite, spherical filler, and carbon fiber are dry-mixed and then further melt-mixed according to the invention, the expanded graphite, spherical filler, and carbon fiber are dispersed satisfactorily. As a result, the fuel-cell separators obtained by this process have a reduced difference in thermal expansion coefficient between the thickness direction and the horizontal direction.

In contrast, when the forming material of Comparative Example 1, which is composed of particles consisting of a thermosetting resin and expanded graphite embedded therein, is used, the separator obtained has an increased difference in thermal expansion coefficient between the thickness direction and the horizontal direction because the forming material contains neither a spherical filler nor carbon fiber even though the production steps are the same as in the Examples.

Furthermore, the mere dry-mixing of a thermosetting resin, expanded graphite, spherical filler, and carbon fiber as in Comparative Examples 2 and 3 results in a large difference in thermal expansion coefficient between the thickness direction and the horizontal direction.

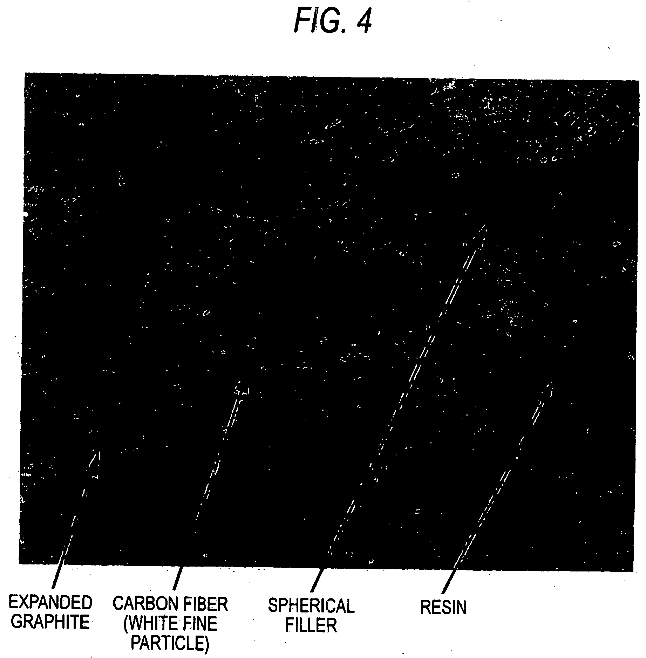

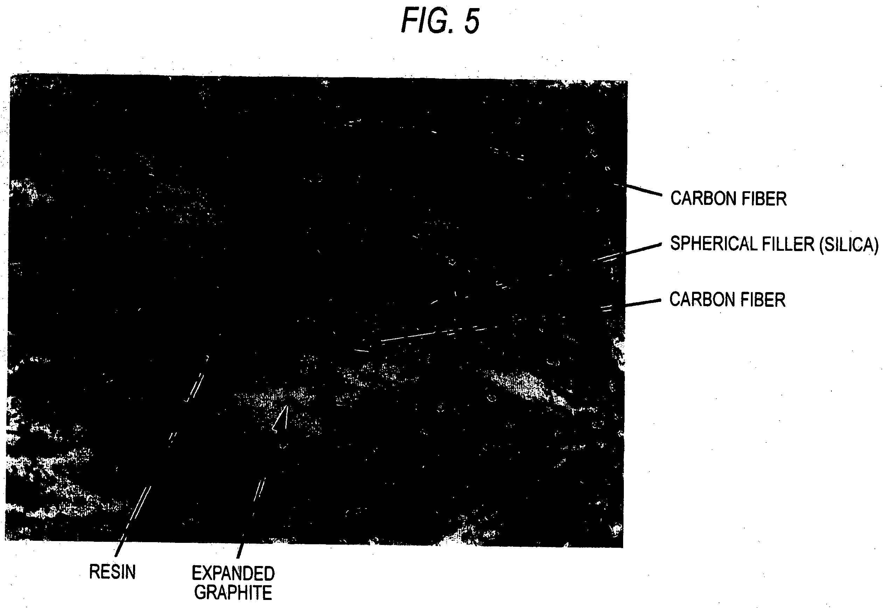

Examination of Compounding Material Dispersion Sections of the samples produced in Example 1 and Comparative Example 4 were photographed with an optical microscope. Optical photomicrographs of the sample of Example 1 and the sample of Comparative Example 4 are shown in Fig. 4 and Fig. 5, respectively. The following can be seen. In the sample of Example 1, the expanded graphite, carbon fiber, and spherical silica are evenly dispersed as fine particles. In contrast, in the sample of Comparative Example 4, the carbon fiber remain long and, in addition, the expanded graphite and spherical silica are poorly dispersed. It can be thought that such a poorly dispersed state of compounding materials is reflected in differences in thermal expansion coefficient and results in a warpage amount.

According to the invention, a high-performance separator for fuel cell is obtained which is reduced in warpage, has excellent suitability for assembly, does not break, attains excellent tight contact between unit cells, and is free from unevenness in contact electrical resistance.

Further, according to the invention, a thermosetting resin, in preparing a conductive resin composition, can be sufficiently evenly mixed with compounding ingredients in a short time period without necessitating the step of solvent removal and treatment as in the wet mixing heretofore in use and without incurring a considerable cost increase, and a high-performance separator for fuel cell which is excellent in shape stability and mechanical properties and free from unevenness in contact electrical resistance can be obtained.

Further, The forming material for fuel-cell separators of the invention gives a high-performance separator for fuel cell in which components are in a satisfactorily dispersed state and which is excellent in shape stability and mechanical properties and free from unevenness in contact electrical resistance. Furthermore, the preparation of the forming material for fuel-cell separators necessitates neither a large high-power mixing machine nor the step of solvent removal and treatment, unlike the wet mixing heretofore in use, and does not incur a considerable cost increase.

The present application is based on Japanese Patent Application Numbers 2003-339470, 2003-339471 and 2003-339472 each filed on September 30, 2003.

## Claims

1. A separator for fuel cell formed from a conductive resin composition,
wherein the difference between the thermal expansion coefficient of the separator for fuel cell in the thickness direction and that in a direction perpendicular to the thickness direction is 20x10⁻⁶ K⁻¹ or smaller,
wherein the conductive resin composition comprises:
20-60% by weight of a dimensionally anisotropic conductive filler;
20-40% by weight of a thermosetting resin;
15-30% by weight of a spherical filler; and
5-10% by weight of a carbon fiber;
based on the total weight of the conductive resin composition obtained by a process comprising the steps of:
preparing a mixed powder by dry-mixing a dimensionally anisotropic conductive filler, a thermosetting resin, a spherical filler, and a carbon fiber at room temperature;
preparing a molten mixture by melt-mixing the mixed powder at a temperature where the thermosetting resin does not cure completely;
preparing a powder comprising particles having a mean particle size of 500 mu m or smaller by solidifying the molten mixture by naturally cooling the molten mixture to obtain a solid matter, pulverizing the solid matter to obtain fine particles of the solid matter, and then classifying the fine particles;
molding the powder filled in a mold into a sheet to obtain a preform at a temperature where the thermosetting resin does not cure completely; and
molding the preform set in a mold for a separator for fuel cell at a temperature where the thermosetting resin cures completely.

2. The separator for fuel cell according to claim 1, wherein the dimensionally anisotropic conductive filler is an expanded graphite.

3. The separator for fuel cell according to claim 1, wherein the spherical filler comprises at least one member selected from a group consisting of a spherical silica and a spherical graphite.

4. The separator for fuel cell according to claim 1, wherein the separator has a thinnest part, and the spherical filler has a mean particle size which is up to 25% of the thickness of the thinnest part.

5. The separator for fuel cell according to claim 1, which has a flexural strength of 40 MPa or higher and a flexural modulus of 12 GPa or lower.

## Patentansprüche

1. Separator für eine Brennstoffzelle, gebildet aus einer leitfähigen Harzzusammensetzung, wobei der Unterschied zwischen dem Wärmeausdehnungskoeffizienten des Separators für eine Brennstoffzelle in der Dickenrichtung und dem in einer Richtung senkrecht zu der Dickenrichtung 20 x 10⁻⁶ K⁻¹ oder kleiner ist,
wobei die leitfähige Harzzusammensetzung umfasst:
20-60 Gew.-% eines dimensional anisotropen leitfähigen Füllstoffs;
20-40 Gew.-% eines wärmehärtbaren Harzes;
15-30 Gew.-% eines kugelförmigen Füllstoffs; und
5-10 Gew.-% einer Kohlenstofffaser;
bezogen auf das Gesamtgewicht der leitfähigen Harzzusammensetzung, erhalten durch ein Verfahren, umfassend die Schritte:
das Herstellen eines gemischten Pulvers durch trockenes Vermischen eines dimensional anisotropen leitfähigen Füllstoffs, eines wärmehärtbaren Harzes, eines kugelförmigen Füllstoffs und einer Kohlenstofffaser bei Raumtemperatur;
das Herstellen einer geschmolzenen Mischung durch Schmelzmischen des gemischten Pulvers bei einer Temperatur, bei der das wärmehärtbare Harz nicht vollständig aushärtet;
das Herstellen eines Pulvers, umfassend Teilchen mit einer mittleren Teilchengröße von 500 µm oder kleiner durch Verfestigen der geschmolzenen Mischung durch natürliches Kühlen der geschmolzenen Mischung, um einen Feststoff zu erhalten, das Pulverisieren des Feststoffs, um feine Teilchen des Feststoffs zu erhalten, und anschließend das Klassieren der feinen Teilchen;
das Formen des in eine Form eingefüllten Pulvers zu einer Folie bzw. Platte, um einen Vorformling zu erhalten, bei einer Temperatur, bei der das wärmehärtbare Harz nicht vollständig aushärtet; und
das Formen des in eine Form für einen Separator für eine Brennstoffzelle eingesetzten Vorformlings bei einer Temperatur, bei der das wärmehärtbare Harz vollständig aushärtet.

2. Separator für eine Brennstoffzelle gemäß Anspruch 1, wobei der dimensional anisotrope leitfähige Füllstoff ein expandierter Graphit ist.

3. Separator für eine Brennstoffzelle gemäß Anspruch 1, wobei der kugelförmige Füllstoff wenigstens ein Element, ausgewählt aus einer Gruppe bestehend aus einem kugelförmigen Siliciumdioxid und einem kugelförmigen Graphit, umfasst.

4. Separator für eine Brennstoffzelle gemäß Anspruch 1, wobei der Separator einen dünnsten Teil aufweist und der kugelförmige Füllstoff eine mittlere Teilchengröße aufweist, welche bis zu 25 % der Dicke des dünnsten Teils beträgt.

5. Separator für eine Brennstoffzelle gemäß Anspruch 1, welcher eine Biegefestigkeit von 40 MPa oder höher und einen Biegemodul von 12 GPa oder niedriger aufweist.

## Revendications

1. Séparateur pour pile à combustible formé à partir d'une composition de résine conductrice,
dans lequel la différence entre le coefficient de dilatation thermique du séparateur pour pile à combustible dans la direction de l'épaisseur et celui dans une direction perpendiculaire à la direction de l'épaisseur est de 20 x 10⁻⁶ K⁻¹ ou inférieure,
dans lequel la composition de résine conductrice comprend :
20-60 % en masse d'une charge conductrice dimensionnellement anisotrope ;
20-40 % en masse d'une résine thermodurcissable ;
15-30 % en masse d'une charge sphérique ; et
5-10 % en masse d'une fibre de carbone ;
rapporté à la masse totale de la composition de résine conductrice obtenue par un procédé comprenant les étapes de :
préparation d'une poudre mixte par mélange à sec d'une charge conductrice dimensionnellement anisotrope, d'une résine thermodurcissable, d'une charge sphérique, et d'une fibre de carbone à température ambiante ;
préparation d'un mélange fondu par mélange à l'état de fusion de la poudre mixte à une température à laquelle la résine thermodurcissable ne durcit pas complètement ;
préparation d'une poudre comprenant des particules ayant une taille moyenne de particules de 500 mu m ou inférieure par solidification du mélange fondu par refroidissement naturel du mélange fondu pour obtenir une matière solide, pulvérisation de la matière solide pour obtenir de fines particules de la matière solide, et tamisage subséquent des fines particules ;
moulage de la poudre introduite dans un moule en une feuille pour obtenir une ébauche à une température à laquelle la résine thermodurcissable ne durcit pas complètement ; et
moulage de l'ébauche fixée dans un moule pour un séparateur pour pile à combustible à une température à laquelle la résine thermodurcissable durcit complètement.

2. Séparateur pour pile à combustible selon la revendication 1, dans laquelle la charge conductrice dimensionnellement anisotrope est un graphite expansé.

3. Séparateur pour pile à combustible selon la revendication 1, dans laquelle la charge sphérique comprend au moins un élément choisi dans un groupe constitué d'une silice sphérique et d'un graphite sphérique.

4. Séparateur pour pile à combustible selon la revendication 1, dans lequel le séparateur présente une partie la plus mince et la charge sphérique présente une taille moyenne de particule qui va jusqu'à 25 % de l'épaisseur de la partie la plus mince.

5. Séparateur pour pile à combustible selon la revendication 1, laquelle présente une résistance à la flexion de 40 MPa ou supérieure et un module de flexion de 12 GPa ou inférieur.
